# EUROPEAN PATENT APPLICATION

(11) **EP 1 939 540 A2**
(43) Date of publication of application: **02.07.2008**
(21) Application number: 07123596.4
(22) Date of filing: 19.12.2007
(51) Int. Cl.: F24D 11/00, F24D 19/10

(54) **A Heating System**

(30) Priority: 21.12.2006 GB 0625482
(71) Applicant: RMSolar, Europort Wakefield Yorkshire WF10 5QS (GB)
(72) Inventor: Griffiths, Martyn, Wakefield Europort West Yorkshire WF10 5QS (GB)
(74) Representative: Smithson, Robert Alan

(57) **Abstract**

A heating system comprising a fluid storage vessel having an outlet arranged to outlet fluid from a firs part of the vessel and an inlet arranged to inlet fluid to a second part of the vessel, the system furttier comprising fluid heating means, wherein the fluid heating means is arranged and operable to heat fluid, which fluid is either removed from the first part of the vessel via the outlet and/or inputted into the system from a fluid input; the fluid heated by the fluid heating means then being returned to the second part of the vessel via the inlet.

## Description

The present invention relates to a heating system, particularly although not exclusively, to a water heating system.

The majority of water heating systems in homes either comprise a hot water storage system or an instantaneous gas combination boiler (combi) that requires no hot water storage vessel.

If a hot water storage system is used, it is either directly heated electrically by means of an immersion heater or it is indirectly heated by means of an internal heat exchanger connected to a central heating boiler. In most cases the indirect cylinders also have an electric immersion heater either for emergency use should the boiler break down or for use in the summer when the boiler is not required to heat the house.

Recently, there has been a high level of investment into renewable energy sources, such as solar energy, for example. In order to efficiently utilise solar energy, some type of hot water storage system is required in order to 'harvest' the solar energy because often hot water is required when there is little or no solar input available e.g after dark or on a heavily overcast day.

In addition to the solar input, solar systems usually require additional heat input and this is generally achieved either by means of the boiler (indirect cylinders) or an immersion heater (direct cylinders).

If a home already has a combination boiler fitted and wants to fit a solar renewable energy system, then a hot water storage system also has to be installed, which will also require means of additional heat input when there is insufficient solar energy to meet the households hot water demand. It is highly advantageous to be able to use an existing combination boiler to provide the additional energy rather than force a consumer to purchase a new suitable boiler.

There is therefore a need to use an existing combination boiler in conjunction with a renewable energy system.

Existing prior art shows two main methods of achieving heat input from a combination boiler in conjunction with renewable energy. The first of these is to shut down or restrict the usage of the domestic hot water side of the combination boiler and then to connect its space heating output to a heat exchanger coil in the hot water cylinder. In other words the combination boiler is converted into a regular boiler.

The second known system is to use the solar heated hot water from the top of the storage vessel to pre-heat the nominally cold water feeding the combination boiler. This system is acceptable if the combination boiler is designed to accept higher than normal feed temperatures, but only a small proportion of combination boilers have this capability. In order to overcome this problem, current practice is to blend down the temperature of the feed water thus reducing the effectiveness of the whole system, adding cost and further complexity. A further disadvantage is that higher than normal feed temperatures tend to make the combination boiler fire on and off in short cycles thus giving erratic output temperatures and generally accelerating wear and tear on the appliance.

It is an object of aspects of the present invention to address the above or other problems.

According to a first aspect of the present invention there is provided a heating system comprising a fluid storage vessel having an outlet arranged to outlet fluid from a first part of the vessel and an inlet arranged to inlet fluid to a second part of the vessel, the system further comprising fluid heating means, wherein the fluid heating means is arranged and operable to heat fluid, which fluid is either removed from the first part of the vessel via the outlet and/or inputted into the system from a fluid input; the fluid heated by the fluid heating means then being returned to the second part of the vessel via the inlet.

Preferably, the heating system is a water heating system.

Preferably, the fluid storage vessel comprises a fluid storage tank, which is preferably a liquid storage tank. Preferably, the fluid storage vessel comprises a water storage tank.

Preferably, the outlet is arranged to outlet fluid from a first end of the fluid storage vessel. Preferably, the inlet is arranged to allow fluid to be inlet toward a second end of the fluid storage vessel. Preferably, the outlet and the inlet are arranged to allow fluid to be outlet and inlet toward opposite ends of the fluid storage vessel.

Preferably, there exists a temperature gradient between fluid in the first part of the vessel and fluid in the second part of the vessel, in use.

Preferably, the outlet is arranged to outlet fluid from at or towards a lower end of the fluid storage vessel, in use. Preferably, the inlet is arranged to inlet fluid at or towards an upper end of the fluid storage vessel, in use.

Preferably, the fluid heating means comprises a combination boiler.

For the avoidance of doubt, it is not considered important where on the vessel the inlet and outlet is situated, only which part of the vessel the fluid itself is drawn from (in the case of the outlet) or inlet.

Preferably, the system further comprises secondary fluid heating means. Preferably, the secondary fluid heating means comprises a renewable energy heating means. Preferably, the secondary fluid heating means comprises a heat exchange arrangement. The secondary fluid heating means may be situated inside the fluid storage vessel. The secondary fluid heating means may be situated in the fluid storage vessel at a position between where the outlet and the inlet are arranged to outlet and inlet fluid from the vessel. The secondary fluid heating means may be situated between the first part of the vessel and the second part of the vessel. The secondary fluid heating means may be situated above the position where the outlet is arranged to outlet fluid from the vessel, in use. The secondary fluid heating means may be situated below the position where the inlet is arranged to inlet fluid into the vessel, in use. The secondary fluid heating means may be situated above the first part of the vessel, in use.

The secondary heating means is preferably arranged in the vessel so as to allow a volume of fluid to be stored thereunder, which fluid is preferably a cold fluid.

Preferably, the secondary fluid heating means comprises solar powered heating means, which is preferably a solar powered heat exchange system.

For the avoidance of doubt, the term "secondary fluid heating means" refers to a secondary means for heating the fluid.

Preferably, the fluid storage vessel comprises temperature detection means. Preferably, the temperature detection means comprises one or more temperature probes. Preferably, the temperature detection means is situated between the positions that the fluid is arranged to be inlet and outlet. Preferably, the temperature detection means is situated between the first part of the vessel and the second part of the vessel.

Preferably, the temperature detection means is operable to communicate temperature information to control means.

Preferably, the control means is operable to cause fluid to enter the second part of the vessel via the inlet, which fluid has preferably been heated, preferably by the fluid heating means. Preferably, the control means is operable to cause fluid to enter the second part of the vessel in response to a temperature detected by the temperature detection means.

In a preferred embodiment, when a temperature detected by the temperature detection means falls below a threshold level, the control means causes fluid to flow through the heating means. Further, preferably, when a temperature detected by the temperature detection means rises above the threshold level, the control means causes fluid to cease flowing through the heating means.

Preferably, the control means is arranged to activate at least one pump, preferably in response to a temperature detected by the temperature detection means, which may be a temperature above or below an activation temperature. Preferably, the at least one pump is operable to pump fluid.

Preferably, the system further comprises at least one fluid output.

The fluid output may comprise a tap. The fluid output may be situated proximal to the inlet. The fluid output may be situated between the fluid heating means and the inlet.

Preferably, the fluid output is operable to output fluid from the second part of the vessel.

The fluid input may be arranged to replace fluid removed from the system via the fluid output. The fluid input may be connected to a continual fluid supply, such as a mains pressure water supply, for example. The fluid input may be situated proximal to the outlet. The fluid input may be situated between the outlet and the fluid heating means.

The fluid input may be arranged to input fluid into the outlet of the vessel.

In a preferred embodiment, the system comprises a mains pressure water input between the outlet and the fluid heating means; and preferably a fluid output between the fluid heating means and the inlet.

Preferably, the system further comprises interface means operable to allow a user to interface with the control means.

According to a further aspect of the invention there is provided a heating system for heating water, the system comprising a water storage tank having an outlet arranged to outlet water from at or toward a first end thereof and an inlet arranged to inlet water at or toward a second end thereof, the water storage tank being arranged, in use, so that the outlet is lowermost and the inlet uppermost, the system further comprising a combination boiler operable and arranged to heat water added to the tank via the inlet.

According to a third aspect of the invention there is provided a method of supplying a heated fluid, the method comprising heating fluid with fluid heating means and adding the heated fluid to an inlet of a fluid storage vessel, the inlet adapted to inlet fluid to a second part of the vessel, the fluid being drawn either from an outlet of the vessel, which outlet is arranged to outlet fluid from a first part of the vessel and/or the fluid being drawn from a fluid input into the system.

According to a fourth aspect of the present invention there is provided a water storage vessel for retrofitting a heating system to an existing boiler, the vessel having an outlet arranged to outlet fluid from a first part of the vessel and an inlet arranged to inlet fluid to a second part of the vessel.

Preferably, the existing boiler is a combination boiler.

According to a further aspect of the present invention there is provided a heating system kit for retrofitting a heating system to an existing boiler, the kit comprising a water storage vessel having an outlet arranged to outlet fluid from a first part of the vessel and an inlet arranged to inlet fluid to a second part of the vessel.

Preferably, the kit further comprises control means.

Preferably, the kit further comprises interface means operable to allow a user to interface with the control means.

Preferably, the kit further comprises at least one pump.

Preferably, the kit further comprises secondary fluid heating means.

Advantageously, the heating system kit can be retrofitted to an existing combination boiler.

All of the features disclosed herein may be combined with any of the above aspects, in any combination.

For a better understanding of the invention, and to show how embodiments of the same may be carried into effect, reference will now be made, by way of example, to the accompanying diagrammatic drawings in which:
Figure 1a shows a schematic view of a heating system in a first configuration;
Figure 1b shows a schematic view of a heating system in a second configuration;
Figure 1c shows a schematic view of a heating system in a third configuration;
Figure 2a shows a schematic view of an injector system for use with the present invention; and
Figure 2b shows a further schematic view of the injector system.

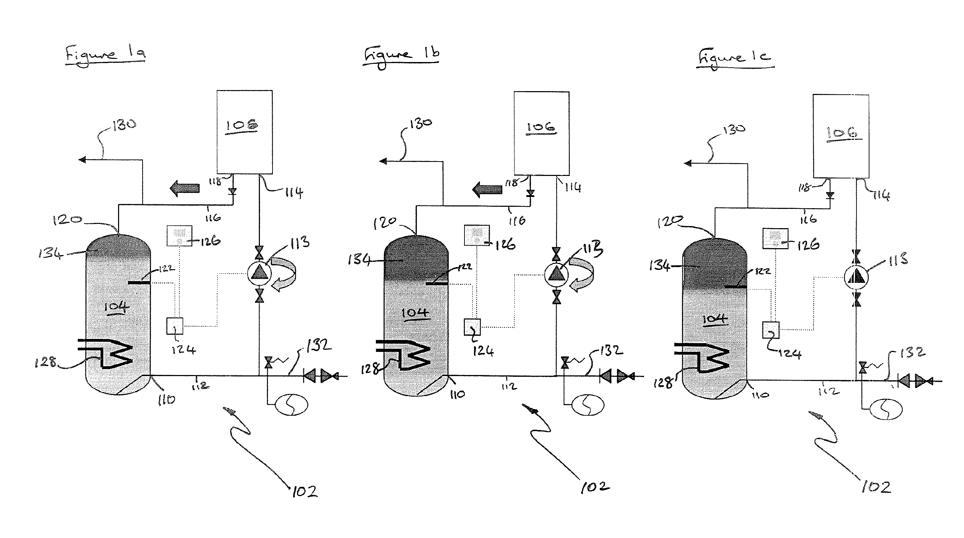

Referring to figures 1a-c there is shown a heating system 102. The system comprises a water tank 104 connected to a combination boiler 106 via pipes.

In more detail, the tank 104 comprises an outlet 110 toward a bottom thereof. A pipe 112 extends out of the outlet 110 and is connected to an input 114 of the boiler 106. The pipe 112 is arranged so that it removes water from the bottom of the tank 104. The pipe 112 has a pump 113 between the outlet 110 of the tank 104 and the input 114. A further pipe 116 is arranged between an outlet 118 of the boiler 106 and an inlet 120 of the tank 104. The inlet 120 is situated at a top of the tank 104 and is arranged to inlet fluid into the top of the tank.

Situated in the tank 104 below the inlet 120, about a third of the way down the tank 104, is a temperature probe 122. The temperature probe 122 measures the temperature of the water within the tank at this position and communicates this information to a control device 124. The control device 124 also communicates with the pump 113 and an interface device 126.

Within the tank 104, between the inlet 120 and the outlet 110, about a third of the way from the bottom of the tank 104, is a heat exchange coil 128. The heat exchange coil 128 is connected to a solar panel (not shown), thus heat from the sun heats the fluid within the coil 128, which in turn heats water in the tank 104 by heat exchange.

The system 102 is not a closed system, it further comprises an output 130, which leads to a tap, or series of taps, (not shown) to allow water to be drawn from the system (hot water, as will be described below), and an input 132 which is connected to mains pressure supply water.

The system 102 functions as follows. The tank 104, which comprises external insulation, contains an amount of water. The tank 104 is arranged so that hot water is at the top of the tank 104, while cold water is at the bottom of the tank 104. This works by the principle of buoyancy, but this is assisted, as will be explained below, by the fact that hot water is added to the top of the tank 104 and cold water is added to the bottom of the tank 104.

The temperature probe 122 is arranged about a third of the way down the tank and communicates temperature information to the control means 124, which may be a microprocessor. The control means 124 is programmed to respond when a temperature measured by the probe 112 falls below a predetermined level to turn on pump 113. In this manner, water is fed into the boiler 106 before being returned to the inlet 120 of the tank 104 and therefore, water is heated by the boiler 106 before being added to the top of the tank 104. The water that is heated in this manner may derived from one of two sources, or both as will be described below.

Water in the top portion of the tank 104 (i.e. the portion of the tank 104 above the probe) may decrease in temperature for one or both of the two following reasons.

Firstly, although the tank 104 is heavily insulated, heat loss will be inevitable. Therefore, over time, heat will escape from the water in the top section of the tank 104. Thus, even if the system is untouched, at intervals, the temperature of the water detected at the probe will fall below the threshold level and the control means will activate the pump 113 to push water through the boiler 106. The throughput of water causes the boiler 106 to fire and thus heat the water (as is known in the art). In this scenario, the water is drawn from the bottom of the tank 104 via outlet 110. As discussed above and as shown in figures 1a-c, the pipe 112 is arranged to remove water from the bottom of the tank 104, thus the removed water will be cold/cool.

Secondly, when a user draws hot water from the system 102 along pipe 130, to maintain the volume of water in the system 102 and because the system is connected to a mains pressure water input 132, cold water from the input 132 enters the tank 104 via the outlet 110. In this manner, the level of hot water at the top of the tank 104 decreases until such a time as he probe 122 detects a temperature below the threshold level and thereby actuates the pump 113. This causes the input water via input 132 (or a portion thereof) to be pumped through the boiler 106 and thus heated.

In a situation were the hot water is being drawn from the system 102 slowly (i.e. at a rate lower than mains pressure) and the probe 113 detects a temperature below the threshold level, then the rate of water being input via input 132 is similarly slow (the pressure in the system 102 is generally constant). Thus, when the pump 113 is activated, it draws a mixture of water from the bottom of the tank 104 (via outlet 110) and from the input 132. In this manner, water is being heated at a greater rate than it is being drawn from the system, thus, even if the hot water continues to be drawn from the system via output 130, the pump 113 will stop when the temperature detected at the probe 122 goes above the threshold level. This cycle will repeat until the outlet 130 is closed and the temperature at probe 122 is above threshold level.

In a second scenario, if the hot water is being drawn from the output 130 at a high rate (i.e. greater than mains pressure of input 132), then when the pump 113 is activated (in response to temperature detected at probe 122), the hot water delivered via output 130 is entirely water from the input 132 (via the boiler 106) thus the pressure of the hot water delivered via the output 130 drops to mains pressure. In this scenario, when water ceases being drawn from output 130, the pump 113 continues to pump water from the tank 104 to the boiler 106 before being returned to the tank 104 (via inlet 120) until the temperature detected at the probe 122 is above the threshold level, whereupon the pump 113 is deactivated by the control means.

The interface device 126 may be a control panel that allows a user to alter the predetermined temperature at which the control means 124 activates the pump 113. The threshold temperature is usually in the region of 50°C to 80°C.

The heat exchange coil 128 is attached to a solar panel. Thus heat from the sun is harvested to heat the water in the tank 104. The heat exchange coil 128 is situated above the part of the tank 104 from which water is removed via the outlet 110. This means that there is a volume of cold water beneath the coil 128 and therefore water drawn via the outlet 110 will not have been heated by the coil 128, thus warm water is not supplied to the combination boiler 106. The heat exchange coil 128 will heat the water in about the middle of the tank, which heated water will rise by convection. Thus, when solar energy is abundant (on a hot clear day, for example) the pump 113 and thus the boiler 106 may rarely be used. Also, because the hot water is stored in an insulated tank 104, water heated by the solar energy heat exchanger 128 is kept in the tank 104 until needed.

Figure 1a shows a scenario where the level of hot water 134 (water above the threshold temperature of the probe 122) is above the probe 122, thus the pump 113 is active and is heating water, which is fed into the tank 104. In figure 1b, the level of hot water 134 has increased thus moved downward toward the probe 122. In figure 1c, the level of hot water 134 covers the probe 122, thus the temperature of water at the probe 122 is above the threshold temperature and the pump 113 is inactive.

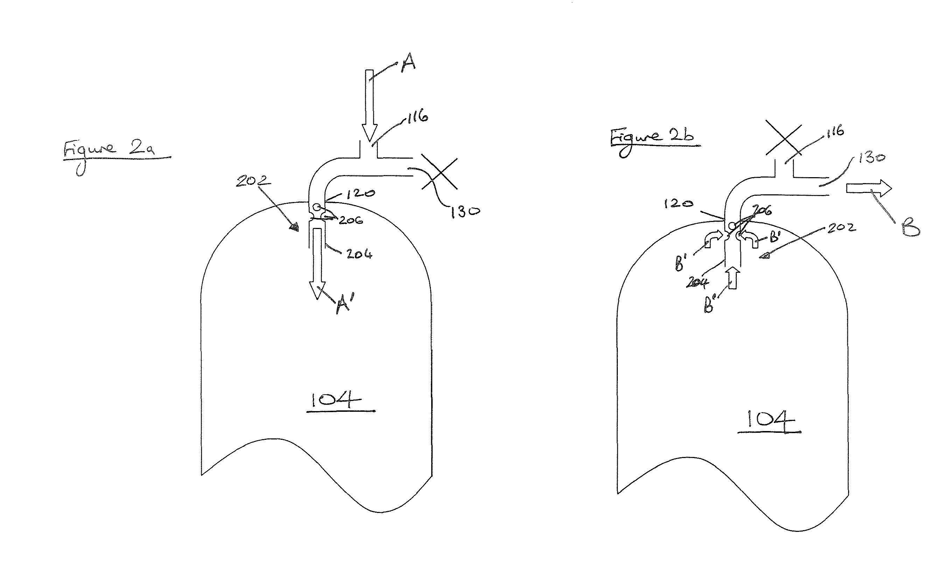

Figures 2a and 2b show an injector 202 situated at the inlet 120 of the tank 104. The injector comprises a cylindrical tube 204 having a plurality of apertures 206 circumferentially spaced therearound. In figure 2a, the boiler 106 is recharging the cylinder 104 with hot water via pipe 116 (as indicated by arrow "A"). The main flow of water is through the centre of the tube 204 (as indicated by arrow "A¹"), thus the entire hot contents are not driven downwards within the cylinder by the ingress of water.

In figure 2b, the cylinder 104 is discharging via outlet 130 (as indicated by arrow "B"). The flow of the water is mixed between central and side flow through the pipe 204 and the apertures 206 (as shown by arrows "B¹") thus water is drawn generally from the top of the cylinder 104.

The present invention provides a heating system capable of using a combination boiler with a hot water storage tank. Furthermore, the invention provides a system that allows a user to harness energy from a secondary source, such as a renewable source, while being able to keep their combination boiler as a primary source of water heating.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A heating system comprising a fluid storage vessel having an outlet arranged to outlet fluid from a first part of the vessel and an inlet arranged to inlet fluid to a second part of the vessel, the system further comprising fluid heating means, wherein the fluid heating means is arranged and operable to heat fluid, which fluid is either removed from the first part of the vessel via the outlet and/or inputted into the system from a fluid input; the fluid heated by the fluid heating means then being returned to the second part of the vessel via the inlet.

2. A heating system according to claim 1, wherein the outlet is arranged to outlet fluid from a first end of the fluid storage vessel.

3. A heating system according to either of claim 1 or claim 2, wherein the inlet is arranged to allow fluid to be inlet toward a second end of the fluid storage vessel.

4. A heating system according to any preceding claim, wherein the outlet and the inlet are arranged to allow fluid to be outlet and inlet at or toward opposite ends of the fluid storage vessel.

5. A heating system according to any preceding claim, wherein there exists a temperature gradient between fluid in the first part of the vessel and fluid in the second part of the vessel, in use.

6. A heating system according to any preceding claim, wherein the outlet is arranged to outlet fluid from at or towards a lower end of the fluid storage vessel, in use.

7. A heating system according to any preceding claim, wherein the inlet is arranged to inlet fluid at or towards an upper end of the fluid storage vessel, in use.

8. A heating system according to any preceding claim, wherein the fluid heating means comprises a combination boiler.

9. A heating system according to any preceding claim, wherein the system further comprises secondary fluid heating means.

10. A heating system according to any preceding claim, wherein the fluid storage vessel comprises temperature detection means.

11. A heating system according to claims 10, wherein the temperature detection means is operable to communicate temperature information to control means.

12. A heating system according to claim 11, wherein the control means is operable to cause fluid to enter the second part of the vessel via the inlet, which fluid has preferably been heated by the fluid heating means.

13. A heating system according to claims 11 or 12, wherein when a temperature detected by the temperature detection means falls below a threshold level, the control means causes fluid to flow through the heating means.

14. A heating system according to any preceding claim, wherein the system further comprises at least one fluid output.

15. A heating system according to claims 14, wherein the fluid output is operable to output fluid from the second part of the vessel.

16. A heating system according to either of claim 14 or claim 15, wherein the fluid input is arranged to replace fluid removed from the system via the fluid output.

17. A heating system according to any preceding claim, wherein the fluid input is connected to a continual fluid supply, such as a mains pressure water supply, for example.

18. A heating system for heating water, the system comprising a water storage tank having an outlet arranged to outlet water from at or toward a first end thereof and an inlet arranged to inlet water at or toward a second end thereof, the water storage tank being arranged, in use, so that the outlet is lowermost and the inlet uppermost, the system further comprising a combination boiler operable and arranged to heat water added to the tank via the inlet.

19. A method of supplying a heated fluid, the method comprising heating fluid with fluid heating means and adding the heated fluid to an inlet of a fluid storage vessel, the inlet adapted to inlet fluid to a second part of the vessel, the fluid being drawn either from an outlet of the vessel, which outlet is arranged to outlet fluid from a first part of the vessel and/or the fluid being drawn from a fluid input into the system.

20. A water storage vessel for retrofitting a heating system to an existing boiler, the vessel having an outlet arranged to outlet fluid from a first part of the vessel and an inlet arranged to inlet fluid to a second part of the vessel.

21. A heating system kit for retrofitting a heating system to an existing boiler, the kit comprising a water storage vessel having an outlet arranged to outlet fluid from a first part of the vessel and an inlet arranged to inlet fluid to a second part of the vessel.
